# EUROPEAN PATENT APPLICATION

(11) **EP 4 685 658 A1**
(43) Date of publication of application: **28.01.2026**
(21) Application number: 25189880.5
(22) Date of filing: 16.07.2025
(51) Int. Cl.: G06F 16/176

(54) **SERVER, FILE SHARING METHOD, AND PROGRAM**

(30) Priority: 26.07.2024 JP 2024121254
(71) Applicant: Casio Computer Co., Ltd., Tokyo 151-8543 (JP)
(72) Inventor: Ito, Masahiro, Hamura-shi, Tokyo, 205-8555 (JP)
(74) Representative: Grünecker Patent- und Rechtsanwälte PartG mbB

(57) **Abstract**

A server (10) according to an embodiment includes a processor (11) that performs a process of, in response to an operation for sharing one or more files in a terminal (20T) connected via a network (N) being detected, displaying, in response to one file of the one or more files being determined to be shared, the one file (NBs2) on a display unit (27) of another terminal (20S) connected via the network (N) with the one file opened, and displaying, in response to two or more files of the one or more files being determined to be shared, a file list (LNBs) containing the two or more files on the display unit (27) of another terminal (20S).

## Description

### FIELD

The present disclosure relates generally to a server, a file sharing method, and a program.

### BACKGROUND

A conventional learning support system including a learning guidance staff terminal and a student terminal connected via a server, is known in which the server distributes an upload file uploaded from the staff terminal to the student terminal (for example, see Jpn. Pat. Appln. KOKAI Publication No. 2021-009266 A).

### SUMMARY

The above learning support system has a problem that a usage method for sharing a plurality of assignments from the staff terminal at one time or sharing a plurality of assignments at the student terminal has not been assumed.

The present disclosure has been made in view of such a problem, and an object thereof is to improve usability in a case where a plurality of files is shared among terminals.

A server according to an embodiment of the present disclosure includes a processor that performs a process of, in response to an operation for sharing one or more files in a terminal connected via a network being detected, displaying, in response to one file of the one or more files being determined to be shared, the one file on a display of another terminal connected via the network with the one file opened, and displaying, in response to two or more files of the one or more files being determined to be shared, a file list containing the two or more files on the display of said another terminal.

According to the present disclosure, it is possible to improve usability in a case where a plurality of files is shared among terminals.

### BRIEF DESCRIPTION OF DRAWINGS

FIG. 1 is a diagram showing an overall configuration of a learning support system 1 according to an embodiment of a server, a file sharing method, and a program of the present disclosure.
FIG. 2 is a block diagram showing a configuration of a learning support server 10 in the learning support system 1.
FIG. 3 is a block diagram showing a configuration of a user terminal (teacher terminal 20T/student terminal 20S) in the learning support system 1.
FIG. 4 is a flowchart showing a learning support function mainly including a notebook distribution process (file sharing process) to be performed by the learning support server 10 of the learning support system 1.
FIG. 5A is a diagram showing a display operation (part 1) of the teacher terminal 20T in a case where a notebook (file) NBt1, which is a digital note to be distributed, is displayed on the teacher terminal 20T and distributed to the student terminal 20S (20S1 to 20Sn) in accordance with the notebook distribution process of the learning support server 10.
FIG. 5B is a diagram showing a display operation (part 2) of the teacher terminal 20T in a case where a notebook to be distributed NBtl is displayed on the teacher terminal 20T and distributed to the student terminal 20S.
FIG. 5C is a diagram showing a display operation (part 3) of the teacher terminal 20T in a case where the notebook to be distributed NBtl is displayed on the teacher terminal 20T and distributed to the student terminal 20S.
FIG. 6A is a diagram showing a display operation (part 1) of the teacher terminal 20T in a case where a notebook to be distributed NBtn is selected from a list LNBt (file list) of two or more notebooks NBtl and NBt2 (notebook icons NBtli and NBt2i), which are digital notes, displayed on the teacher terminal 20T, and distributed to the student terminal 20S (20S1 to 20Sn) in accordance with the notebook distribution process of the learning support server 10.
FIG. 6B is a diagram showing a display operation (part 2) of the teacher terminal 20T in a case where the notebook to be distributed NBtn is selected from the list LNBt (file list) of the notebooks NBtl and NBt2 (icons NBtli and NBt2i) displayed on the teacher terminal 20T and distributed to the student terminal 20S.
FIG. 7 is a flowchart showing a distributed notebook deleting process (shared file deleting process) to be performed by the learning support server 10 of the learning support system 1.
FIG. 8A is a diagram showing a display operation (part 1) of the student terminal 20S in a case of confirming a notebook NBs2 distributed from the teacher terminal 20T to the student terminal 20S in accordance with the notebook distribution process of the learning support server 10.
FIG. 8B is a diagram showing a display operation (part 2) of the student terminal 20S in a case of confirming the notebook NBs2 distributed from the teacher terminal 20T to the student terminal 20S.
FIG. 9A is a diagram showing a display operation (part 1) of the student terminal 20S in a case of confirming two or more notebooks NBs2 and NBs3 distributed from the teacher terminal 20T to the student terminal 20S in accordance with the notebook distribution process of the learning support server 10.
FIG. 9B is a diagram showing a display operation (part 2) of the student terminal 20S in a case of confirming the two or more notebooks NBs2 and NBs3 distributed from the teacher terminal 20T to the student terminal 20S.

### DETAILED DESCRIPTION

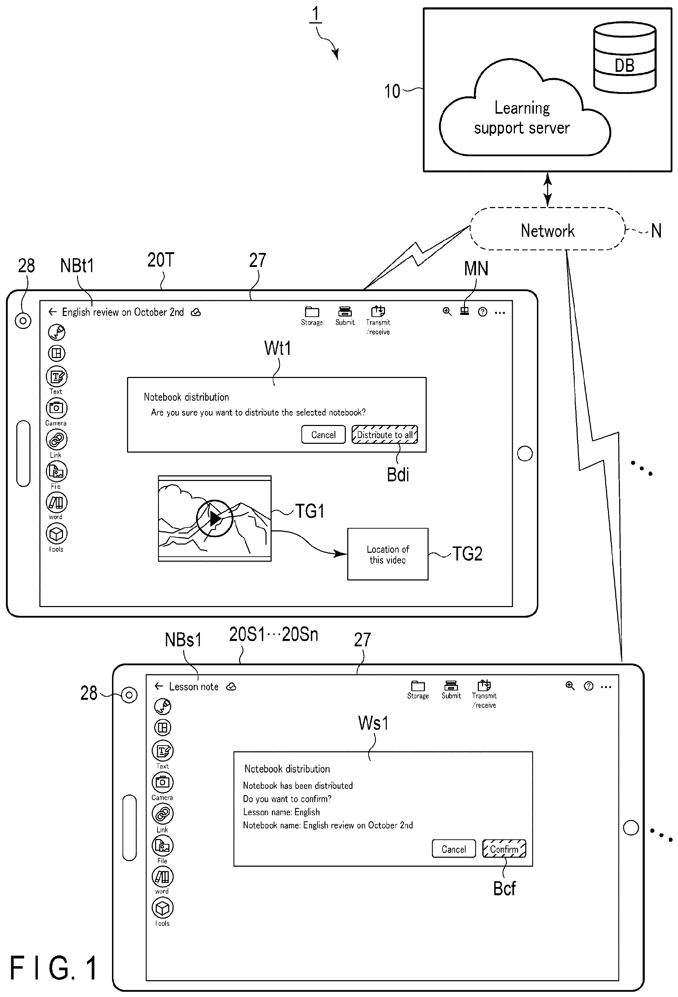

Hereinafter, a learning support system 1 according to an embodiment of a server, a file sharing method, and a program of the present disclosure will be described with reference to the drawings. As shown in FIG. 1, the learning support system 1 of the embodiment includes a learning support server 10, which is a Web server (server), a teacher terminal 20T (one terminal), which is to be used by, for example, a teacher of a school, and a student terminal 20S (20S1... 20Sn) (another terminal), which is to be used by a student. The teacher terminal 20T and the student terminal 20S each have a function of communicating with the learning support server 10 via a communication network N. A database DB, which is a storage unit of the learning support server 10, may be entirely or partially integrated with or separated from the learning support server 10. Here, as an example, it is assumed that the teacher terminal 20T in a lesson of a certain school, grade, and class and a plurality of student terminals 20S1... 20Sn that takes the lesson are grouped using the learning support server 10. The teacher terminal 20T and the student terminal 20S may be tablet terminals, personal computers (PC), or other information processing devices (electronic devices) with similar functions.

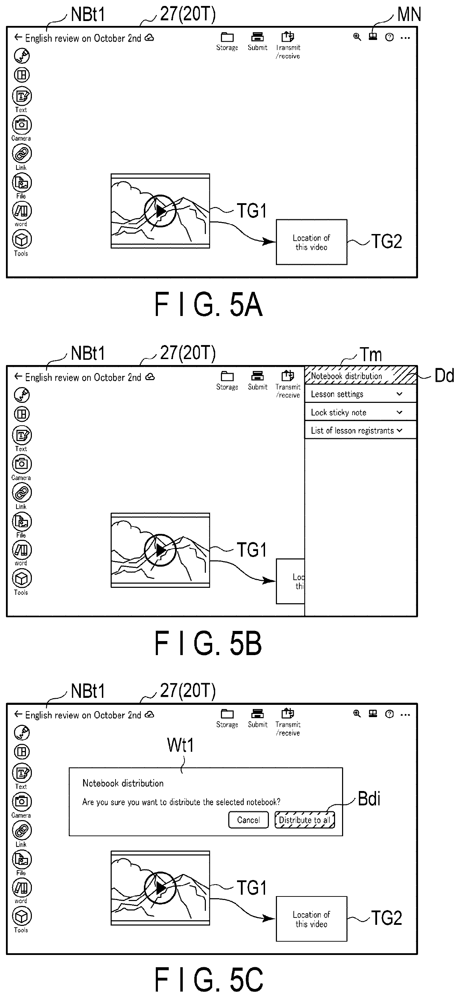

The teacher terminal 20T and the student terminal 20S that have registered with the learning support server 10 can perform at least the following by a learning support function (X) of the learning support server 10. A notebook NB (see FIG. 5A for example), which is a digital notebook file displayed on a WEB browser and named with an editable arbitrary title (notebook name), can be generated, stored and displayed, and an electronic sticky note TG to which arbitrary information is input using various tools (text, camera, link, file, dictionary, and mathematical tool) in the generated notebook NB can be generated, edited, stored, and displayed. The electronic sticky note TG is a digital teaching material (data item) of a minimum unit for studying, and can be edited and updated by enlarging an individual electronic sticky note TG to input text, attach a uniform resource locator (URL) to a link destination, input a mathematical expression, or import a file. A lesson screen for generating, storing, and displaying (managing) the notebook NB with a lesson (subject) name of a school, grade, and class as an index. The electronic sticky note TG can be arranged and moved at any position in the notebook NB. For example, see the Web site "ClassPad.net" <https://classpad.net/note/guide/contents/ > (searched on July 12, 2024).

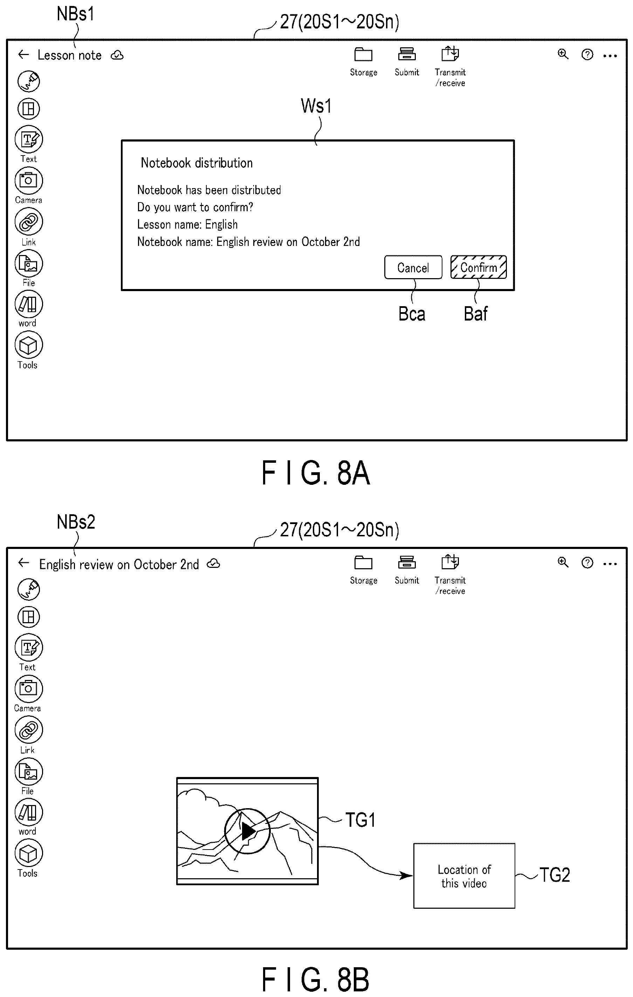

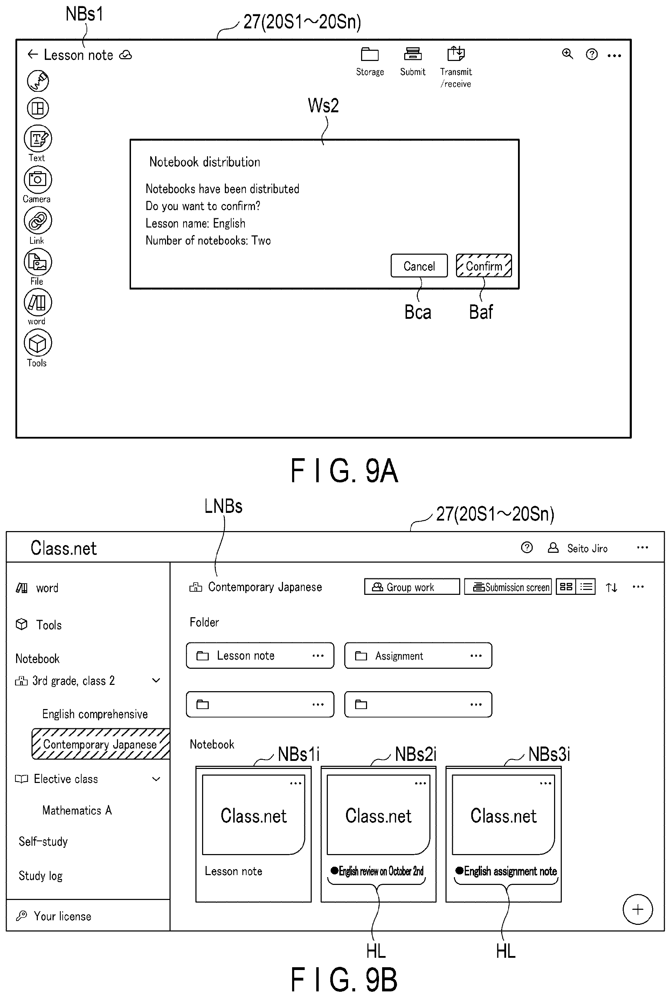

The learning support server 10 of the embodiment further has the following learning support functions (A) to (F). (A) A function of storing data of one or more notebooks to be distributed NB in a shared storage area in response to an instruction (request) to distribute (share information) the one or more notebooks NB from the teacher terminal 20T to the student terminal 20S that takes a lesson. (B) A function of notifying, if one notebook NB is to be distributed, the student terminal 20S that the one notebook NB has been distributed (see FIG. 8A), and notifying, if two or more notebooks NB are to be distributed, the student terminal 20S that the two or more notebooks NB have been distributed (see FIG. 9A). (C) A function of opening, if an operation of [confirm] is detected in the student terminal 20S in response to the notification to the student terminal 20S that the one notebook NB has been distributed, the distributed one notebook NB, and displaying its content on the student terminal 20S (see FIG. 8B). (D) A function of displaying, if an operation of [confirm] is detected in the student terminal 20S in response to the notification to the student terminal 20S that the two or more notebooks NB have been distributed, a list (file list) of at least the notebook names of the two or more distributed notebooks NB on the student terminal 20S (see FIG. 9B). (E) A function of opening, if it is detected that an arbitrary notebook NB has been selected from the two or more notebooks NB displayed as the list on the student terminal 20S, the selected notebook NB, and displaying its content on the student terminal 20S. (F) A function of performing, if the two or more notebooks NB are to be displayed as the list, an identifiable display HL by highlighting a notebook name of an (unread/un-displayed) notebook NB that has not been opened in the past (see FIG. 9B).

Hereinafter, in the present specification, an operation of the learning support server 10 to display a predetermined image and content (notebook, file list, window, and the like) on a display unit of the student terminal 20S or the teacher terminal 20T includes a process in which the learning support server 10 generates data for displaying the image and content on the display unit of the student terminal 20S or the teacher terminal 20T and transmits the generated data to the student terminal 20S or the teacher terminal 20T.

The teacher terminal 20T in FIG. 1 shows that, on a screen (display unit 27) on which one notebook to be distributed "English review on October 2nd" NBtl is displayed, a distribution instruction window Wt1 for a user (teacher) to make an instruction (request) to distribute the notebook NBtl in accordance with an operation of a teacher menu icon MN. In addition, the student terminal 20S (20S1... 20Sn) in FIG. 1 shows that, on a screen (display unit 27) of a notebook "lesson note" NBs1 that a user (student) is working on, a window Ws1 for notifying the user that the one notebook has been distributed from the teacher terminal 20T is displayed.

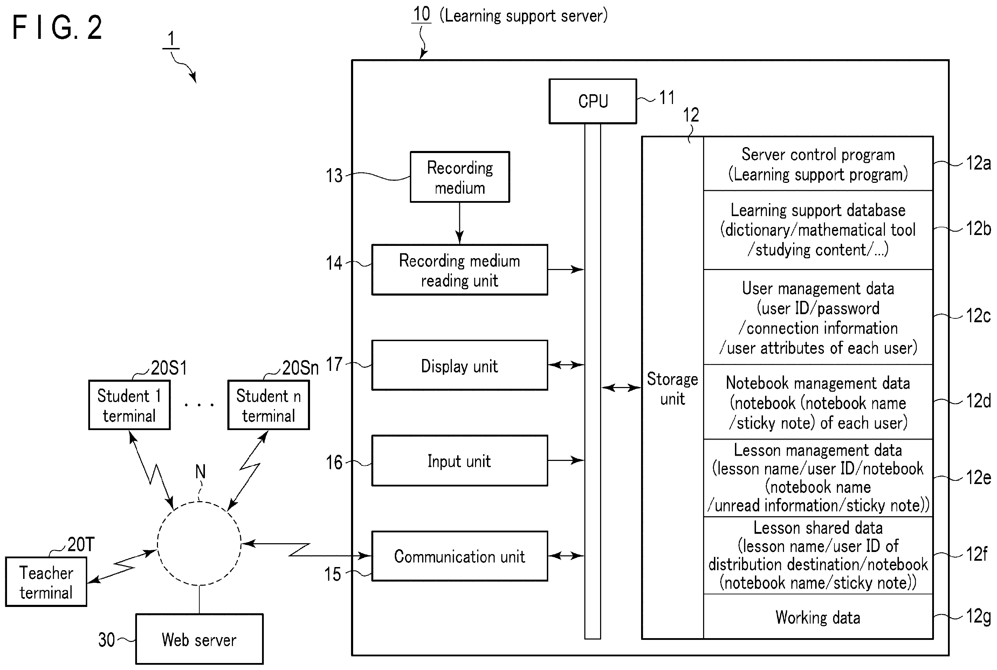

As shown in FIG. 2, the learning support server 10 includes a control unit (central processing unit (CPU)) 11, which is a computer, a storage unit 12 configured by a nonvolatile memory device, a recording medium reading unit 14, a communication unit 15, an input unit 16, and a display unit 17. The control unit 11 is a processor that controls, in accordance with a server control program (including a learning support program) 12a stored in the storage unit 12, an operation of each circuitry unit in response to an input signal corresponding to a user operation from the input unit 16 or a signal from the user terminal 20 (teacher terminal 20T/student terminal 20S) on the communication network N by the communication unit 15. As the storage unit 12, in one example, a non-volatile memory such as a hard disk drive (HDD) or a solid state drive (SSD) capable of write and read processing at any given timing, a non-volatile memory such as a read only memory (ROM), and a volatile memory such as a random access memory (RAM) may be used in any combination. The communication unit 15 includes, in one example, one or more wireless or wired communication interface units to enable transmission and reception of information with the communication network N. As the wireless interface, for example, an interface which adopts a low-power wireless data communication standard such as a wireless local area network (LAN) is used.

The server control program 12a may be stored in the storage unit 12 in advance, may be read from an external recording medium 13, such as a CD-ROM, through a recording medium reading unit 14 and stored in the storage unit 12, or may be downloaded from a Web server (program server in this example) 30 on the communication network N, and read and stored in the storage unit 12. The server control program 12a includes a learning support program in addition to a system program that controls the entire learning support server 10. The learning support program includes programs for causing the control unit 11 to perform at least the learning support functions (X) and (A) to (F) described above.

The storage unit 12 secures a learning support database storage area 12b, a user management data storage area 12c, a notebook management data storage area 12d, a lesson management data storage area 12e, a lesson shared data storage area 12f, and a working data storage area 12g, in addition to the storage area of the server control program 12a. In the learning support database storage area 12b, learning support data serving as teaching materials, such as various dictionaries including an English-Japanese dictionary and a Japanese dictionary, various mathematical tools including functions, calculations, and equations/inequalities, and various types of studying content including reference books and workbooks, are stored together with control programs thereof. In the user management data storage area 12c, data of a user's registered password, connection information including an IP address, user attributes (school, grade, class, name, and the like) is stored for each user of the user terminal 20 (teacher terminal 20T/student terminal 20S) on which a learning support server using application is installed, in association with a user ID (user identification information: application ID in this example).

In the notebook management data storage area 12d, data of a notebook NB generated in response to a user operation is stored for each user (user ID) stored (registered) in the user management data storage area 12c, as data in which the notebook name and an electronic sticky note TG, which is the content of the notebook NB, are associated with each other. The data of the electronic sticky note TG contains the content of the electronic sticky note TG and its attributes (data setting information, such as date and time of generating/editing, data format, and sub-attributes), the coordinates indicating a display position (arrangement position) of the electronic sticky note TG on the notebook screen NB, the size of the electronic sticky note TG, and the like. In the lesson management data storage area 12e, user IDs of the participants in a lesson (the user IDs of the teacher and the students) and data of a notebook NB for each user ID (containing the notebook name, unread information if the notebook NB is unread, and data of an electronic sticky note TG, which is the content of the notebook NB) are stored in association with the school, grade, class, and lesson name of the lesson (lesson ID) registered by the teacher terminal 20T, for example.

In the lesson shared data storage area 12f, data of one or more notebooks to be distributed NB in response to an instruction (request) to distribute them from a certain user terminal 20 (the teacher terminal 20T in this example) to another user terminal 20 (the student terminal 20S in this example) (the data containing the notebook names and data of electronic sticky notes TG, which are the content of notebooks NB) is stored in association with a lesson name (lesson ID) and the user ID of a distribution destination. In the working data storage area 12g, various types of data generated or acquired by a control of an operation in each unit by the control unit 11 are temporarily stored, as needed.

The learning support server 10 configured in the above-described manner achieves various functions, which will be described later in connection with the explanation of the operations, through the control of an operation of each circuitry unit by the control unit 11 in accordance with an instruction described in the server control program 12a and an operation of software and hardware in conjunction.

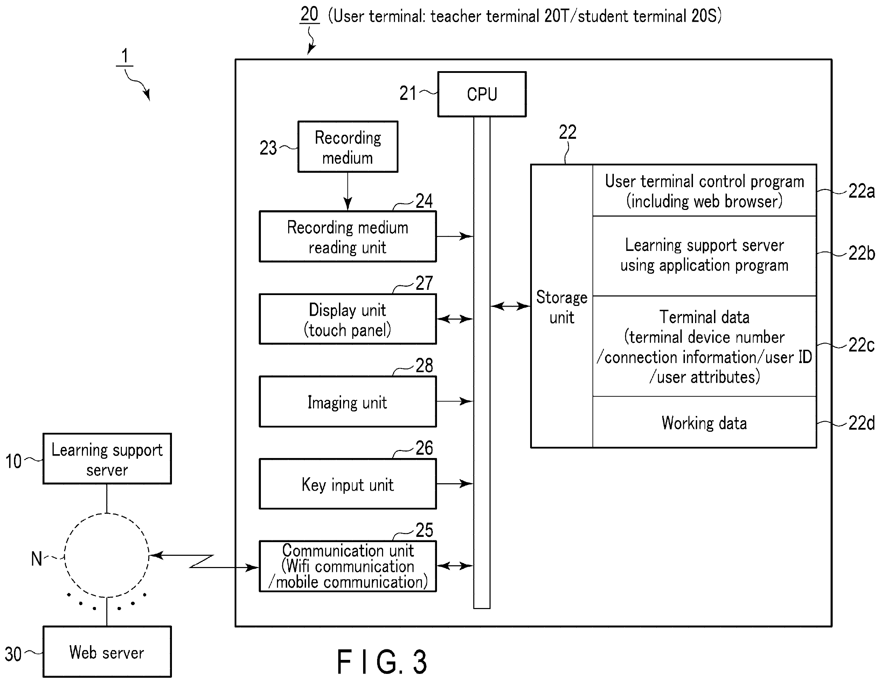

As shown in FIG. 3, the user terminal 20 (teacher terminal 20T/student terminal 20S) includes a control unit (CPU) 21, which is a computer, a storage unit 22, a recording medium reading unit 24, a communication unit (Wi-Fi (registered trademark) communication/mobile communication) 25, a key input unit 26, a display unit 27 (which is a touch-screen display unit in an exemplary embodiment), and an imaging unit (camera) 28. The control unit 21 is a processor that controls the operation of each circuitry unit in accordance with a user terminal control program (including a WEB browser) 22a and a learning support server using application program (a learning support server using application) 22b stored in the storage unit 22. As the storage unit 22, in one example, a non-volatile memory such as a hard disk drive (HDD) or a solid state drive (SSD) capable of write and read processing at any given timing, a non-volatile memory such as a read only memory (ROM), and a volatile memory such as a random access memory (RAM) may be used in any combination. The communication unit 25 includes, in one example, one or more wireless or wired communication interface units to enable transmission and reception of information with the communication network N. As the wireless interface, for example, an interface which adopts a low-power wireless data communication standard such as a wireless local area network (LAN) is used.

The key input unit 26 is an input device which may be a keyboard, a touch panel, a touch pad, a mouse, or the like, and receives operation data input or selected by the user, etc. The user terminal control program 22a may be stored in the storage unit 22 in advance, may be read by the recording medium reading unit 24 from an external recording medium 23, such as a memory card, and stored in the storage unit 22, or may be downloaded from the Web server (program server in this example) 30 on the communication network N via the communication unit 25 and stored in the storage unit 22. The learning support server using application 22b is downloaded from the Web server (a program server in an application store in this example) 30 on the communication network N via the communication unit 25 and stored in the storage unit 22.

The user terminal control program 22a includes, in addition to a system program for controlling the entire user terminal 20 (teacher terminal 20T/student terminal 20S), a program (a WEB browser or the like) for transmitting and receiving various types of data by establishing communication connection with an external communication device including the learning support server 10 and the Web server 30 on the communication network N as needed in cooperation with various application programs stored in the storage unit 22. The learning support server using application 22b includes a program for establishing communication connection with the learning support server 10 and performing data input/output processes corresponding to at least the learning support functions (X) and (A) to (F).

The storage unit 22 secures a terminal data storage area 22c, a working data storage area 22d, and the like in addition to a program storage area for storing the user terminal control program 22a and the learning support server using application 22b. In the terminal data storage area 22c, in addition to connection information such as a terminal device number and an IP address for communicably connecting to an external communication device including the learning support server 10 and the Web server 30 on the communication network N through a WEB browser, data of the user ID (user identification information: application ID in this example) and user attributes (school, grade, class, name, lesson to be taken (lesson ID), and the like) are stored as terminal data unique to the user terminal 20. In the working data storage area 22d, various types of data generated or acquired by a control of an operation in each unit by the control unit 21 are temporarily stored, as needed.

The user terminal 20 (student terminal 20S/teacher terminal 20T) configured in the above-described manner achieves various functions, which will be described later in connection with the explanation of the operations, through the control of an operation of each circuitry unit by the control unit 21 in accordance with an instruction described in the user terminal control program 22a and the learning support server using application 22b, and an operation of software and hardware in conjunction.

Next, an operation of the learning support system 1 according to the embodiment is described. Here, it is assumed that the teacher terminal 20T and the student terminal 20S (20S1 to 20Sn) belonging to a specific group, in which the terminals are grouped and registered in the user management data storage area 12c and the lesson management data storage area 12e of the learning support server 10 as participants in the same lesson (for example, a lesson (subject) of a certain school, grade, and class), and that the lesson is conducted using the learning support server 10. In the learning support server 10, if a connection request (login) is received from the grouped user terminal 20 (teacher terminal 20T/student terminal 20S), the control unit 11 establishes a communication connection with the teacher terminal 20T and the student terminal 20S that have been requested for connection (step S1).

If a distribution request of a notebook NB is not detected (step S2 (No)), the teacher terminal 20T displays a notebook "English review on October 2nd" NBtl (including an electronic sticky note TG1 being an assignment for an English lesson, in this example and an electronic sticky note TG2, which are linked by a link image) generated by the learning support server 10 on the display unit 27 of the teacher terminal 20T (step S18) as shown in FIG. 5A for example.

If a user (teacher) performs a selecting operation (a touch operation via the display unit 27 or a determining operation via the key input unit 26) on a teacher menu icon MN on the upper right of the screen on which the notebook "English review on October 2nd" NBtl is displayed, the learning support server 10 (the control unit 11) displays a teacher menu Tm from the right end of the notebook NBtl displayed on the teacher terminal 20T as shown in FIG. 5B. If the teacher performs a selecting operation on a selection item [notebook distribution] Dd in the teacher menu Tm, the learning support server 10 displays a distribution instruction window Wt1 for an instruction to distribute the notebook NBtl on the screen of the notebook NBtl as shown in FIG. 5C. Then, if the user (teacher) performs a selecting operation on a distribution instruction button [distribute to all] Bdi on the distribution instruction window Wt1 (step S2 (Yes)), the learning support server 10 acquires data of the notebook to be distributed NBtl and information on the distribution destination (the user IDs of the participants associated with the lesson name [English] in the lesson management data (12e)) (step S3). The learning support server 10 associates the acquired data of the notebook to be distributed "English review on October 2nd" NBtl (including the electronic sticky note TG1 and the electronic sticky note TG2, which are linked by the link image) and the user IDs of the distribution destination with the lesson name [English] of the target school, grade, and class, and stores them in the lesson shared data storage area 12f (step S4).

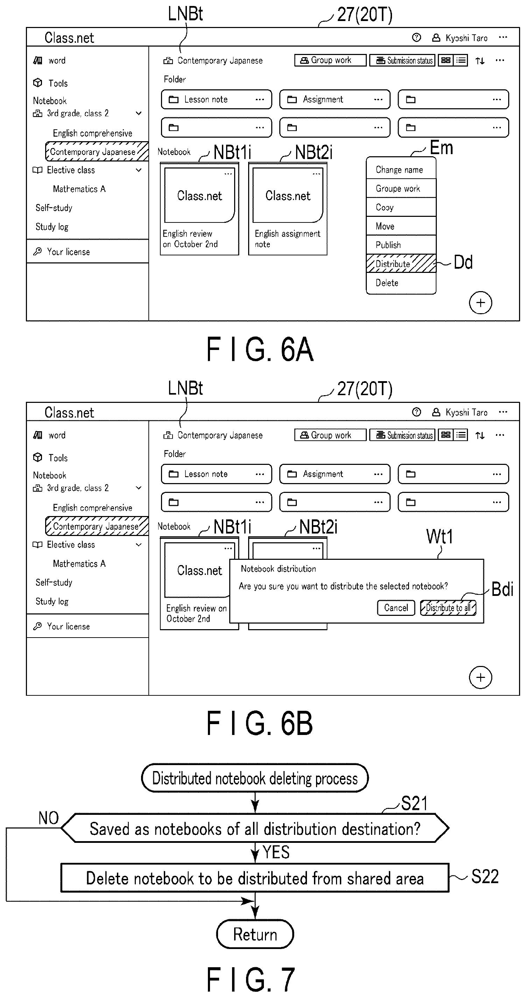

Note that, as a method of instructing (requesting) the learning support server 10 from the teacher terminal 20T to distribute an arbitrary notebook NBt to the student terminal 20S (20S1 to 20Sn), in addition to the method of making an instruction (request) for distribution by displaying the distribution instruction window Wt1 while the notebook to be distributed "English review on October 2nd" NBtl is displayed on the teacher terminal 20T, as described with reference to FIGS. 5A to 5C, an instruction (request) for distribution may be made by selecting an arbitrary notebook NBtn (notebook icon NBtni) from a notebook list LNBt (file list of notebook icons NBtli, NBt2i,... and so on) displayed on the teacher terminal 20T as described later with reference to FIGS. 6A and 6B.

That is, in response to an operation of the teacher terminal 20T, as shown in FIG. 6A for example, the learning support server 10 displays the generated notebook list LNBt (file list of notebook icons NBtli and NBt2i) of the notebooks "English review on October 2nd" NBtl and "English assignment note" NBt2 in association with 3rd grade, class 2 [English] [Contemporary Japanese] on the display unit 27 of the teacher terminal 20T (step S18).

In the notebook list LNBt (file list), if the notebook NBtn (the icon NBtli of the notebook to be distributed "English review on October 2nd" NBtl in this example) is selected by the user (teacher) (through a touch operation via the display unit 27 or a determining operation via the key input unit 26), the learning support server 10 (the control unit 11) displays a teacher edit menu Em on the screen of the notebook list LNBt (file list). If the teacher performs a selecting operation on a selection item [distribute] Dd in the teacher edit menu Em, the learning support server 10 displays a distribution instruction window Wt1 for an instruction to distribute the selected notebook NBtl on the screen of the notebook list LNBt (file list) as shown in FIG. 6B. Then, if the user (teacher) performs a selecting operation on a distribution instruction button [distribute to all] Bdi on the distribution instruction window Wt1 (step S2 (Yes)), the learning support server 10 acquires data of the notebook to be distributed NBtl and information on the distribution destination (the user IDs of the participants associated with the lesson name [English] in the lesson management data (12e)) (step S3) in the same manner as described above. The learning support server 10 associates the acquired data of the notebook to be distributed "English review on October 2nd" NBtl (including the electronic sticky note TG1 and the electronic sticky note TG2, which are linked by the link image) and the user IDs of the distribution destination with the lesson name [English] of the target school, grade, and class, and stores them in the lesson shared data storage area 12f (step S4).

The learning support server 10 (the control unit 11) determines whether the number of notebooks to be distributed NB stored in the lesson shared data storage area 12f is one or more (step S5). Here, if it is determined that one notebook NB (notebook "English review on October 2nd" NBtl) is to be distributed (step S5 (Yes)), as shown in FIG. 8A for example, the control unit 11 displays a window Ws1 for notifying the student that one notebook "English review on October 2nd" NBtl has been distributed from the teacher terminal 20T on the screen that the student is working on (a notebook "lesson note" NBs1 in this example) displayed on the display unit 27 of the student terminal 20S (20S1 to 20Sn) of each of all the lesson participants of the distribution destination (step S6). On the window Ws1, if the student performs a selecting operation on a [confirm] button Baf for an instruction to confirm its content or a [cancel] button Bca for an instruction to continue working (step S7 (Yes)), the learning support server 10 (the control unit 11) saves (stores) the data of the notebook to be distributed "English review on October 2nd" NBtl (including the electronic sticky note TG1 and the electronic sticky note TG2, which are linked by a link image) stored in the lesson shared data storage area 12f as a notebook "English review on October 2nd" NBs2 associated with the user ID of the distribution destination of the target lesson name [English] in the lesson management data storage area 12e, and adds unread information (step S8).

If it is determined that a selecting operation has been performed on the [confirm] button Baf on the window Ws1 displayed on the student terminal 20S (20S1 to 20Sn) (step S9 (Yes)), as shown in FIG. 8B, the learning support server 10 (the control unit 11) opens and displays the notebook to be distributed "English review on October 2nd" NBs2, which has been saved (stored) as the notebook of the student terminal 20S in the lesson management data storage area 12e, on the display unit 27 of the student terminal 20S of the distribution destination where the selecting operation has been performed on the [confirm] button Baf (step S10). The control unit 11 deletes the unread information in the notebook "English review on October 2nd" NBs2 saved (stored) in the lesson management data storage area 12e and opened and displayed (displayed/read) on the student terminal 20S of the distribution destination (step S11). As described above, in the student terminal 20S, by performing a selecting operation on the [confirm] button Baf on the window Ws1 displayed on the screen that the student is working on (the notebook "lesson note" NBs1 in this example), the student can immediately open the one notebook "English review on October 2nd" NBs2 distributed by the teacher terminal 20T, and confirm its content.

On the other hand, if it is determined in step S9 that the selecting operation has been performed on the [cancel] button Bca on the window Ws1 displayed on the student terminal 20S (20S1 to 20Sn) (step S9 (No)), the learning support server 10 (the control unit 11) deletes the window Ws1, returns the display of the notebook "lesson note" NBs1 that the student is working on, and allows the student to continue working on the student terminal 20S (step S18).

Furthermore, in a case where it is desired to instruct (request) the learning support server 10 from the teacher terminal 20T to additionally distribute another notebook NB to the student terminal 20S, the teacher terminal 20T makes an instruction (request) to distribute one notebook NB while the notebook to be distributed NB is displayed on the teacher terminal 20T as described with reference to FIGS. 5A to 5C for example, or makes an instruction (request) to distribute one notebook NBtn by selecting the notebook to be distributed NBtn from the notebook list LNBt (file list) displayed on the teacher terminal 20T as described with reference to FIGS. 6A and 6B (steps S2 to S4).

For example, in a case where, after the instruction to distribute the one notebook "English review on October 2nd" NBs2 has been made in response to the operation of the teacher terminal 20T, an instruction to distribute another notebook "English assignment note" NBt2 (see FIG. 6A) is made, the learning support server 10 (the control unit 11) determines that two or more (two in this example) notebooks NB stored in the lesson shared data storage area 12f are to be distributed (step S5 (No)). As shown in FIG. 9A for example, the control unit 11 displays a window Ws2 for notifying the student that two or more (two in this example) notebooks have been distributed from the teacher terminal 20T on the screen (the notebook "lesson note" NBs1 in this example) that the student is working on displayed on the display unit 27 of the student terminal 20S (20S1 to 20Sn) of each of all the lesson participants of the distribution destination (step S12). On the window Ws2, if the student performs a selecting operation on a [confirm] button Baf for an instruction to confirm its content or a [cancel] button Bca for an instruction to continue working (step S13 (Yes)), the learning support server 10 (the control unit 11) saves (stores) the data of the two notebooks to be distributed "English review on October 2nd" NBtl and "English assignment note" NBt2 stored in the lesson shared data storage area 12f as notebooks "English review on October 2nd" NBs2 and "English assignment note" NBs3 associated with the user ID of the distribution destination of the target lesson name [English] in the lesson management data storage area 12e, and adds unread information (step S14).

If it is determined that the selecting operation has been performed on the [confirm] button Baf on the window Ws2 displayed on the student terminal 20S (20S1 to 20Sn) (step S15 (Yes)), as shown in FIG. 9B, the learning support server 10 (the control unit 11) reads the notebook "lesson note" NBs1, which has already been saved (stored) and displayed (read) as a notebook of the student terminal 20S in the lesson management data storage area 12e, and the two notebooks "English review on October 2nd" NBs2 and "English assignment note" NBs3, which have been saved (stored) in step S4, and displays a notebook list LNBs (file list) including these as notebook icons NBs1i, NBs2i, and NBs3i on the display unit 27 of the student terminal 20S of the distribution destination where the selecting operation has been performed on the [confirm] button Baf (step S16). At this time, highlighting display (identifiable display) HL is performed to highlight the notebook names ("English review on October 2nd" and "English assignment note") of the distributed and unread notebooks NBs2 and NBs3 in the notebook icons NBs1i, NBs2i, and NBs3i by, for example, bolding the notebook names with a dot mark at the beginning. Note that the highlighting display (identifiable display) HL of the notebook name (title) in the notebook icon NBsni is not limited to display by adding a dot or in bold, and highlighting display (identifiable display) HL may be performed using other methods, such as display by adding a color marker or in a blinking manner. As a result, the user (student) of the student terminal 20S can easily confirm that two or more (two in this case) notebooks "English review on October 2nd" NBs2 and "English assignment note" NBs3 have been newly distributed from the teacher terminal 20T.

In the notebook list LNBs, for example, if any one of the notebook icons NBs2i and NBs3i, in which the identifiable display HL is performed on the notebook names, is selected by the user (student) (step S17 (Yes)), the learning support server 10 (the control unit 11) opens the notebook "English review on October 2nd" NBs2 or "English assignment note" NBs3 corresponding to the selected notebook icon (NBs2i or NBs3i in this example), and displays it on the display unit 27 of the student terminal 20S (step S10). The control unit 11 deletes the unread information in the notebook "English review on October 2nd" NBs2 or "English assignment note" NBs3 opened and displayed (displayed/read) on the student terminal 20S (step S11). As described above, in the student terminal 20S, by performing a selecting operation on the [confirm] button Baf on the window Ws2 displayed on the screen that the student is working on (the notebook "lesson note" NBs1 in this example), the student can immediately confirm the two or more notebooks "English review on October 2nd" NBs2 and "English assignment note" NBs3 distributed by the teacher terminal 20T in the notebook list LNBs, immediately open an arbitrary notebook NBsn among them, and confirm its content.

Note that, a case where the teacher terminal 20T makes an instruction (request) to distribute an additional notebook ("English assignment note" NBt2 in this example), and two or more notebooks NB are to be distributed, which has been described in accordance with the above-described step SS (No) -> S12 to S17, is a case where the teacher terminal 20T makes an instruction (request) to distribute an additional notebook NBt2 before the student performs a selecting operation on the [confirm] button Baf or the [cancel] button Bca on the window Ws1 displayed on the student terminal 20S in response to the instruction to distribute the first notebook "English review on October 2nd" NBtl (that is, before the distributed notebook NBtl is saved in the lesson management data storage area 12e as the notebook of the user of the distribution destination) (step S7 (No) -> S2). In this case, the window Ws1 displayed on the student terminal 20S in accordance with step S6 is switched to the window Ws2 in accordance with step S12. In addition, in a case where the teacher terminal 20T further makes an instruction to distribute an additional notebook NBtn before the student performs a selecting operation on the [confirm] button Baf or the [cancel] button Bca on the window Ws2 (that is, before the distributed two notebooks NBtl and NBt2 are saved in the lesson management data storage area 12e as the notebooks of the user of distribution destination) (step S13 (No) -> S2), a similar process of displaying the window Ws2 on the student terminal 20S is repeated in this case (step S5 (No) →S12).

If it is determined in step S15 that the selecting operation has been performed on the [cancel] button Bca on the window Ws2 displayed on the student terminal 20S (step S15 (No)), the learning support server 10 (the control unit 11) deletes the window Ws2, returns the display of the notebook "lesson note" NBs1 that the student is working on, and allows the student to continue working on the student terminal 20S (step S18).

If the data of the one or more notebooks to be distributed NBtn stored in the lesson shared data storage area 12f (step S8 or S14) in response to an instruction (request) from the teacher terminal 20T (step S2 (Yes)) has been saved (stored) in association with each user ID in the lesson management data storage area 12e as the notebooks NBsn of all the users of distribution destination (step S21 (Yes) in FIG. 7), the learning support server 10 deletes the data of the notebooks to be distributed NBtn stored in the lesson shared data storage area 12f (step S22).

In the learning support server 10, if the communication connection with all the grouped user terminals 20 (teacher terminal 20T/student terminal 20S) is disconnected (logged out) (step S19 (Yes)), the control unit 11 terminates the process in accordance with the series of the learning support functions described above.

According to the learning support system 1 of the embodiment, in response to an instruction (request) from the teacher terminal 20T to distribute (share) an arbitrary notebook to be distributed NBtn (file), which is a digital note generated and managed by the learning support server 10, to the student terminal 20S (20S1 to 20Sn) participating in a lesson, the learning support server 10 stores data of the notebook to be distributed NBtn in the lesson shared data storage area 12f in association with the lesson name and the user ID of the distribution destination. If one notebook NBtn stored in the lesson shared data storage area 12f is to be distributed, the learning support server 10 displays the window Ws1 for notifying the student that the one notebook NBtl has been distributed to the student terminal 20S of the distribution destination, and if two or more notebooks NBtn are to be distributed, the learning support server 10 displays the window Ws2 for notifying the student that the two or more notebooks NBtl, NBt2,...., and so on have been distributed to the student terminal 20S of the distribution destination. If the [confirm] button Baf on the window Ws1 displayed on the student terminal 20S is operated, the learning support server 10 immediately opens the one notebook to be distributed NBtl and displays its content on the student terminal 20S. In addition, if the [confirm] button Baf on the window Ws2 displayed on the student terminal 20S is operated, the learning support server 10 displays a list (notebook list) LNBs (file list) of the notebook icons NBtli, NBt2i,..., and so on, in which the notebook names (titles) corresponding to the unread two or more notebooks to be distributed NBtl, NBt2,..., and so on are highlighted (identified), on the student terminal 20S. If an arbitrary notebook icon NBtni in the notebook list LNBs is selected (operated), the learning support server 10 opens a notebook NBtn corresponding to the selected notebook icon NBtni, displays its content, and deletes the unread information in the displayed notebook NBtn.

As described above, the learning support server 10 stores, in the lesson shared data storage area 12f, the data of one or more notebooks NBtn in response to an instruction (request) to distribute them from the teacher terminal 20T, and notifies the student of the number of the notebooks to be distributed NBtn to the student terminal 20S of the distribution destination and performs display according to the number based on the situation of the notebooks to be distributed NBtn stored in the lesson shared data storage area 12f, and can efficiently perform the process of distributing the notebooks NBtn without a burden. Then, if one notebook NBtn has been distributed, the user (student) of the student terminal 20S can immediately open the notebook NBtn and confirm its content. In addition, if two or more notebooks NBtl, NBt2,..., and so on have been distributed, the user can immediately confirm a list LNBs of the notebook names (titles) in which unread notebooks can be identified, and can select an arbitrary notebook name from the notebook names and open the corresponding notebook NBtn to confirm its content. Therefore, for example, it is possible to improve the usability in a case where two terminals of the teacher terminal 20T and the student terminal 20S share two or more notebooks (files) NBtl, NBt2,...., and so on. The interaction process between the teacher and the learning support server 10 enables the teacher to perform technical tasks (such as a notebook sharing process) in a reliable manner.

Note that, in the above embodiment, the teacher terminal 20T designates the student terminals 20S1 to 20Sn of all the students participating in a lesson as the distribution destination of the notebook NBtn, as shown by the distribution instruction button [distribute to all] Bdi in the distribution instruction window Wt1 in FIG. 5C or 6B for example. The distribution destination is not limited thereto, and the student terminal 20Sn of a student arbitrarily selected from a list of students participating in a lesson may be designated as the distribution destination, for example.

Furthermore, in the above embodiment, the teacher terminal 20T is configured to designate the notebooks to be distributed NBtn one by one to instruct (request) the learning support server 10 to distribute two or more notebooks NBtl, NBt2,..., and so on to the student terminal 20S. The configuration of the teacher terminal 20T is not limited thereto, and the teacher terminal 20T may be configured to select two or more notebooks NBtl and NBt2 (notebook icons NBtli and NBt2i) as the notebooks to be distributed from the notebook list LNBt shown in FIGS. 6A and 6B for example, and then cause the distribution instruction window Wt1 to be displayed to make a distribution instruction (request), thereby simultaneously distributing the two or more notebooks NBtl, NBt2,..., and so on to the student terminal 20S.

Furthermore, in the above embodiment, the function of the learning support server 10 that distributes and shares a notebook NB (file), which is a digital note, to the student terminals 20S, which are grouped participants in the same lesson, in response to an instruction (request) from the teacher terminal 20T has been described. It is needless to say that the function of the learning support server 10 may be applied as a function that a certain file (NB) to which a title generated and managed by the server (10) is added is distributed and shared among user terminals (20T/20S (20S1 to 20Sn)) communicatively connected to the server (10) from a user terminal (20T/20S) (one terminal) to another user terminal (20S/20T) (the other terminal) in response to an instruction (request) of the one terminal (20T/20S).

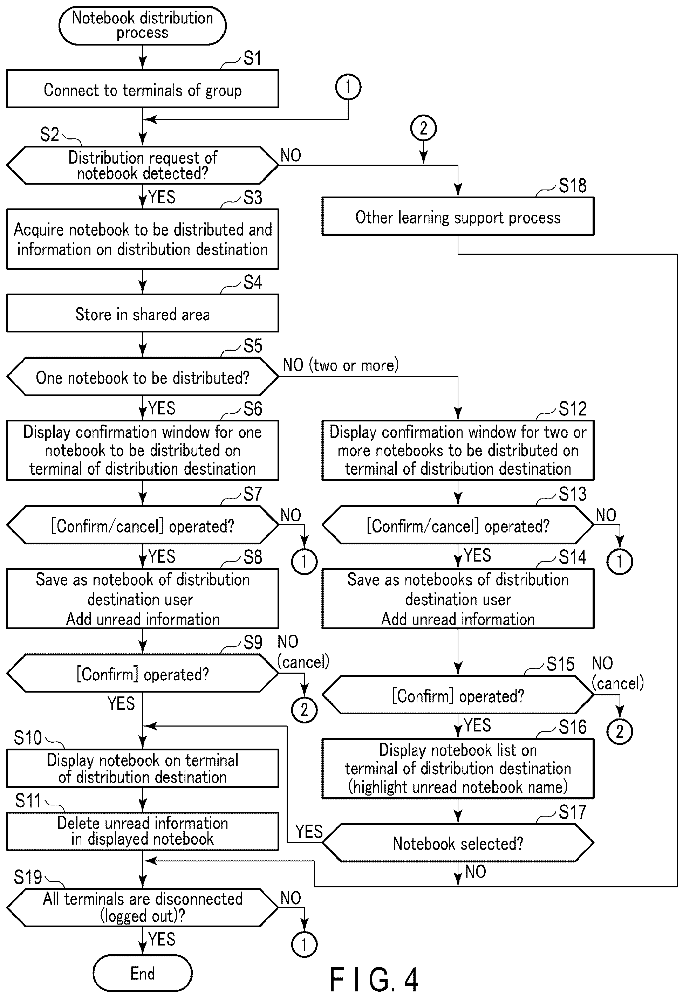

The method of each of the processes performed by the learning support system 1 described in the above embodiment, that is, each method, such as the process of the learning support server 10 mainly including the notebook distribution process shown in the flowcharts of FIGS. 4 and 7, can be stored, as a computer-executable program, in a storage medium of an external storage apparatus, such as a memory card (a ROM card or a RAM card), a magnetic disk (a floppy (registered trademark) disk, a hard disk, or the like), an optical disk (CD-ROM, DVD, or the like), and a semiconductor memory, and can be distributed. Furthermore, a computer (CPU) of an information processing apparatus (electronic device) reads the program stored in the medium of the external storage apparatus into a storage apparatus, and the operations can be controlled based on the read program, thereby achieving the various functions described in the embodiment, and performing a process similar to the above-described processes.

In addition, the data of the program for achieving each of the processes can be transmitted on the communication network (N) in a form of program codes, and data of the program is obtained from a computer apparatus (program server) connected to this communication network (N) and imported to an information processing apparatus (electronic device), and stored in a storage apparatus, thereby achieving the above-described functions.

The disclosure herein is not limited to the foregoing embodiments. For practical implementation, various modifications may be adopted without departing from its gist. The various embodiments may be discretionarily combined for implementation, and such combinations will produce combined effects. Moreover, the embodiments involve various aspects, and appropriate combinations of the disclosed features will permit various teachings to be derived. For example, if omission of several features from the entire configuration or structure disclosed for the embodiments can realize the intended object and provide the effects, the configuration or structure after such omission may be derived as the disclosed teachings.

## Claims

1. A server comprising a processor configured to perform a process of,
in response to an operation for sharing one or more files in a terminal connected via a network being detected:
displaying, in response to one file of the one or more files being determined to be shared, the one file on a display of another terminal connected via the network with the one file opened; and generating, in response to two or more files of the one or more files being determined to be shared, data for displaying a file list containing the two or more files on the display of said another terminal.

2. The server according to claim 1, wherein
the processor is configured to perform a process of
generating, in response to the file list being determined to be displayed on the display of said another terminal, data for identifiably displaying a file that has not been displayed on said another terminal among the two or more files contained in the file list.

3. The server according to claim 2, wherein
the processor is configured to perform a process of:
notifying, in response to one file of the one or more files being determined to be shared, said another terminal of sharing of the one file;
displaying, in response to an operation of said another terminal based on the notification of sharing of the one file, the one file on the display of said another terminal with the one file opened;
notifying, in response to two or more files of the one or more files being determined to be shared, said another terminal of sharing of the two or more files; and
generating, in response to an operation of said another terminal based on the notification of sharing of the two or more files, data for displaying the file list on the display of said another terminal.

4. The server according to claim 3, wherein
the processor is configured to perform a process of
generating data for displaying, in response to an operation of said another terminal for selecting any file contained in the file list, the selected file on the display of said another terminal with the selected file opened.

5. The server according to claim 4, wherein
the processor is configured to perform a process of
generating, in response to the file list being determined to be displayed on the display of said another terminal, data for displaying the file list, without identifying a title of a file that has been opened and whose content has been displayed on the display of said another terminal among the two or more files contained in the file list.

6. The server according to claim 1, wherein
the one or more files each are a digital note editable in response to an operation of said another terminal.

7. A file sharing method of causing a processor to perform a process of,
in response to an operation for sharing one or more files in a terminal connected via a network being detected:
displaying, in response to one file of the one or more files being determined to be shared, the one file on a display of another terminal connected via the network with the one file opened; and displaying, in response to two or more files of the one or more files being determined to be shared, a file list containing the two or more files on the display of said another terminal.

8. A program causing a processor to perform a process of,
in response to an operation for sharing one or more files in a terminal connected via a network being detected: displaying, in response to one file of the one or more files being determined to be shared, the one file on a display with the one file opened; and displaying, in response to two or more files of the one or more files being determined to be shared, a file list containing the two or more files.
